# EUROPÄISCHE PATENTSCHRIFT

(11) **EP 2 601 423 B1**
(45) Veröffentlichungstag und Bekanntmachung des Hinweises auf die Patenterteilung: **31.12.2014**
(21) Anmeldenummer: 11740634.8
(22) Anmeldetag: 01.08.2011
(51) Int. Cl.: F16C 35/063, F16C 35/067, F16C 35/073, F16C 35/077, F16C 33/62, F16C 33/64, C25D 7/04

(54) **LAGERANORDNUNG UND VERFAHREN ZUR HERSTELLUNG EINES LAGERAUSSENRINGS ODER LAGERINNENRINGS MIT EINER REIBUNGSERHÖHENDEN BESCHICHTUNG**
BEARING ARRANGEMENT AND METHOD FOR PRODUCING A BEARING OUTER RING OR BEARING INNER RING WITH A FRICTION-INCREASING COATING
AGENCEMENT DE PALIER ET PROCÉDÉ DE FABRICATION D'UNE BAGUE EXTÉRIEURE DE PALIER OU D'UNE BAGUE INTÉRIEURE DE PALIER AVEC UN REVÊTEMENT AUGMENTANT LE FROTTEMENT

(30) Priorität: 05.08.2010 DE 102010038942
(43) Veröffentlichungstag der Anmeldung: 12.06.2013
(73) Patentinhaber: Aktiebolaget SKF, 41 550 Göteborg (SE)
(72) Erfinder: GLÄNTZ, Wolfgang, 97422 Schweinfurt (DE); HORLING, Peter, 97453 Schonungen-Mainberg (DE); LIESEGANG, Hans-Jürgen, 26419 Schortens (DE)
(74) Vertreter: Schonecke, Mitja
(86) Internationale Anmeldenummer: PCT/EP2011/063178
(87) Internationale Veröffentlichungsnummer: WO 2012/016937

(56) Entgegenhaltungen:
- EP-A1- 1 300 485
- EP-A1- 1 314 898
- DE-A1- 10 311 917
- DE-A1- 19 718 307
- DE-A1- 19 910 579
- DE-A1-102005 006 210
- DE-A1-102006 028 430
- DE-B2- 2 364 275
- FR-A1- 2 315 624
- US-A- 1 861 446
- US-A- 2 431 949
- US-A- 3 929 596

## Beschreibung

Die Erfindung betrifft ein Verfahren zur Herstellung eines Lageraußenrings oder Lagerinnenrings eines Lagers.

Wird ein gattungsgemäßes Lager in ein Gehäuse eingebaut bzw. zur Lagerung einer Welle eingesetzt, kommt es insbesondere bei sehr großen Lagerdurchmessern häufig zu einem Wandern des Lagerrings relativ zur Gehäusebohrung bzw. zur Welle. Dieses Wandern kann dabei in Umfangsrichtung und auch in axiale Richtung auftreten. Da eine derartige Wanderbewegung sehr nachteilig ist, muss zumeist mit aufwändigen Mitteln die Bewegung unterbunden werden, was durch formschlüssige Elemente erreicht werden kann. Diese sind aber sowohl in der Herstellung als auch in der Montage kostenintensiv.

Es ist bekannt, Lagerringe mit einer Beschichtung zu versehen. Eine solche Lösung zeigt die DE 103 11 917 A1. Ähnliche Ausgestaltungen offenbaren die EP 1 314 898 A1, die DE 199 10 579 A1, die DE 10 2006 028 430 A1, die DE 197 18 307 A1, die FR 2 315 624 A1, die DE 23 64 275 B2 und die US 2 431 949 A.

Der Erfindung liegt daher die Aufgabe zu Grunde, ein Verfahren zur Herstellung einer Lageranordnung der genannten Art so fortzubilden, dass in einfacher und kostengünstiger Weise auch bei großen Lagern die besagte Wanderbewegung zuverlässig unterbunden wird.

Die Lösung dieser Aufgabe durch die Erfindung ist dadurch gekennzeichnet, dass das Verfahren die Schritte aufweist:
a) beidseitiges Abschließen der Stirnseiten des Lageraußenrings oder des Lagerinnenrings mit Deckelelementen und im Falle des Lageraußenrings des radial außenliegenden Raums mit einem Abdeckelement, so dass ein flüssigkeitsdichter Raum entsteht;
b) Einbringen mindestens einer Anode und Einfüllen eines Elektrolyts in den Raum, wobei in dem Elektrolyt vorzugsweise Hartstoffpartikel enthalten sind;
c) Anlegen einer Gleichspannung zwischen den Lageraußenring oder den Lagerimenring und die mindestens eine Anode, bis sich eine Schicht gewünschter Dicke bestehend aus dem Material der Anode galvanisch an die Oberfläche der Sitzfläche oder der Bohrung angelegt hat,
wobei der Raum nur teilweise mit Elektrolyt gefüllt wird und während Schritt c) der Lageraußenring oder der Lagerinnenring gedreht wird.

Die außenzylindrische Sitzfläche des Lageraußenrings und/oder die zylindrische Bohrung des Lagerinnenrings sind somit zumindest teilweise mit einer reibungserhöhenden Beschichtung versehen.

Die reibungserhöhende Beschichtung weist bevorzugt Hartstoffpartikel auf, die durch eine elektrolytisch abgeschiedene Metallschicht, insbesondere durch eine Nickelschicht, an der Oberfläche der außenzylindrischen Sitzfläche des Lageraußenrings und/oder an der zylindrischen Bohrung des Lagerinnenrings fixiert sind. Die Hartstoffpartikel sind dabei vorzugsweise Diamant-Partikel, Bornitrid-Partikel, Silizium-Karbid-Partikel oder Korund-Partikel.

Die reibungserhöhende Beschichtung kann auch eine Zink- oder Molybdän-Schicht sein (mit oder ohne Hartstoffpartikel), wobei die Zink- oder Molybdän-Schicht vorzugsweise durch einen galvanischen Vorgang oder einen Spritzvorgang, insbesondere durch einen Plasmaspritzvorgang oder einen Flammspritzvorgang, aufgebracht ist.

Die Dicke der reibungserhöhenden Beschichtung liegt zumeist bei einem Wert von weniger als 0,5 mm. Ein besonders bevorzugter Bereich der Dicke liegt dabei bei einem Wert von weniger als 0,2 mm.

Die Oberflächenrauheit (Rₐ) der reibungserhöhenden Beschichtung weist bevorzugt einen Wert von mindestens 15 µm, besonders bevorzugt einen Wert von mindestens 20 µm, auf. Es sei allerdings darauf hingewiesen, dass die Oberflächenrauheit sehr stark vom Beschichtungsverfahren abhängt und der genannte Wert daher auch stark streuen kann.

Die außenzylindrische Sitzfläche des hergestellten Lageraußenrings und/oder die zylindrische Bohrung des hergestellten Lagerinnenrings haben bevorzugt einen Durchmesser von mindestens 500 mm. Demgemäß handelt es sich um ein größeres Lager, bei dem der Trend zum Wandern der Ringe in ihrer Aufnahme besonders groß ist.

Der hergestellte Lageraußenring ist in der Bohrung des ersten Bauteils bzw. das zweite Bauteil ist in der Bohrung des hergestellten Lagerinnenrings vorzugsweise durch einen Schrumpfsitz angeordnet. Das radiale Fügen von Bauteilen, die einen festen Sitz oder eine Übergangspassung haben, kann nur in einem gewissen Toleranzbereich erfolgen. Daher ist unter Schrumpfsitz hier ein angepasster Schrumpfsitz zu verstehen.

Das Lager kann dabei ein Wälzlager oder ein Gleitlager sein.

Gemäß der Erfindung wird also der Außen- und/oder der Innenring des Lagers an seiner Sitzfläche in oder am benachbarten Bauteil (Gehäuse, Welle) mit einer reibungserhöhenden Beschichtung versehen. Durch diese Beschichtung wird das Wandern bzw. Drehen des Lagerrings relativ zum benachbarten Bauteil verhindert oder jedenfalls wesentlich erschwert.

Als Montagemöglichkeit des Lager(innen- oder -außen)rings in die Gehäusebohrung oder auf die Welle hat sich in besonderer Weise ein thermisches Aufschrumpfen bewährt. Dabei kann das im Durchmesser größere Bauteil erwärmt und aufgesetzt werden; alternativ oder additiv kann das im Durchmesser kleinere Bauteil abgekühlt und dann aufgesetzt werden. Nach dem Temperaturausgleich liegt ein fester, unter radialer Spannung stehender Verbund vor.

Die vorgeschlagene Ausgestaltung ermöglicht einen festen Sitz des Lageraußenrings in seiner Aufnahmebohrung im Gehäuse bzw. des Lagerinnenrings auf der Welle, auch bei großen Durchmessern. Durch die reibungserhöhende Beschichtung verhaken sich insbesondere beim Einsatz von Hartstoffpartikeln diese in der Gegenoberfläche, so dass ein Mikroformschluss erreicht wird.

In der Zeichnung sind eine hergestellte Lageranordnung und ein Ausführungsbeispiel der Erfindung dargestellt. Es zeigen:
- Fig. 1: im Radialschnitt eine hergestellte Lageranordnung, bei der ein Lager in einem Gehäuse eingebaut ist und eine Welle lagert,
- Fig. 2: die Einzelheit "X" gemäß Fig. 1, wobei nur der Lageraußenring samt reibungserhöhender Beschichtung dargestellt ist, und
- Fig. 3: ein Lager, das erfindungsgemäß in einer Vorrichtung aufgenommen ist, mit der auf der Oberfläche der Bohrung des Lagerinnenrings eine reibungserhöhende Beschichtung erzeugt wird.

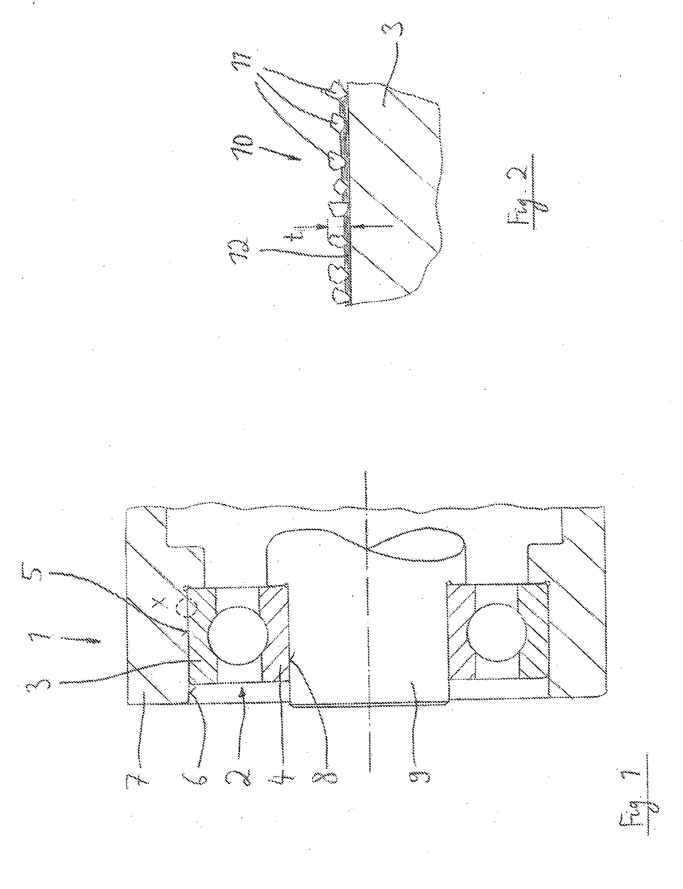

In Fig. 1 ist eine hergestellte Lageranordnung 1 zu sehen, die ein Lager 2 aufweist, das hier als Rillenkugellager ausgebildet ist. Das Lager 2 hat einen Lageraußenring 3 und einen Lagerinnenring 4, wobei zwischen den Lagerringen Kugeln angeordnet sind. Der Lageraußenring 3 sitzt mit seiner außenzylindrischen Sitzfläche 5 in einer Bohrung 6, die in ein Gehäuse 7 eingearbeitet ist. Der Lagerinnenring 4 hat eine zylindrische Bohrung 8, die zur Aufnahme einer Welle 9 mit einem entsprechenden Abschnitt ausgebildet ist.

Das Lager 2 kann groß ausgeführt sein, wobei der Durchmesser der zylindrischen Bohrung 8 bzw. der außenzylindrischen Sitzfläche 5 deutlich mehr als 500 mm betragen kann. Um ohne aufwändige Maßnahmen einen sicheren Sitz der Lagerringe 3, 4 in der Gehäusebohrung bzw. auf der Welle sicherzustellen, sind vorliegend die außenzylindrische Sitzfläche 5 des Außenrings 3 und die zylindrischen Bohrung 8 des Innenrings 4 mit einer reibungserhöhenden Beschichtung 10 versehen, wie sie in Fig. 2 schematisch illustriert ist.

Hiernach ist eine Beschichtung 10 auf die zylindrische Fläche des Lageraußenrings 3 - skizziert in Fig. 2 - bzw. des Lagerinnenrings 4 aufgebracht. Die Beschichtung 10 besteht aus einer elektrolytisch abgeschiedenen Metallschicht 12 (vorliegend aus einer Nickelschicht), die eingesetzt wird, um auf der Sitzfläche 5 bzw. in der Bohrung 8 Hartstoffpartikel 11 zu fixieren. Dabei wird als Hartstoff 11 vorliegend Diamantpulver eingesetzt, das Diamanten mit einer durchschnittlichen Korngröße von ca. 30 bis 100 µm aufweist. Die Dicke t der reibungserhöhenden Beschichtung 10 ist demgemäß gering und liegt bevorzugt im Bereich zwischen 0,05 mm und 0,5 mm, besonders bevorzugt im Bereich von 0,2 mm.

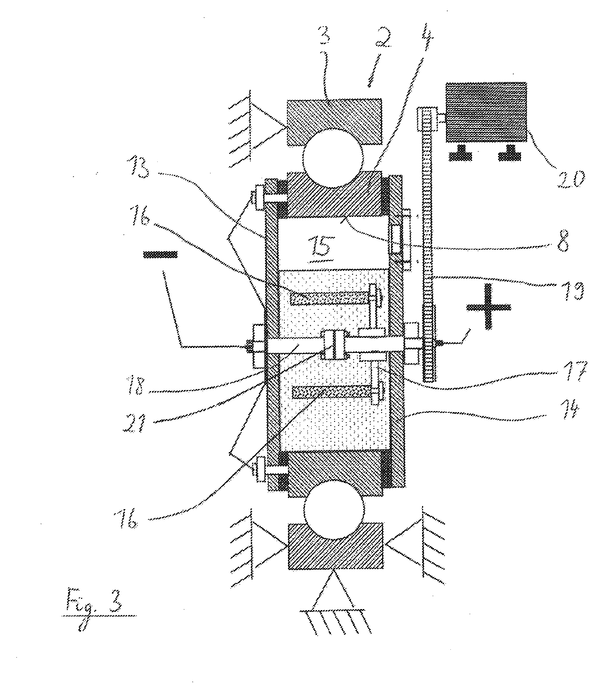

In Fig. 3 ist eine nur schematisch dargestellte Vorrichtung zu sehen, mit der die zylindrische Bohrung 8 des Lagerinnenrings 4 mit der reibungserhöhenden Beschichtung 10 erfindungsgemäß versehen werden kann. Hierzu sind stirnseitig an den Lagerinnenring 4 zwei Deckelelemente 13 und 14 angebracht, die nach ihrer Montage einen flüssigkeitsdichten Raum 15 abschließen; dieser Raum wird teilweise durch die Bohrung 8 begrenzt. Der Raum 15 kann auch als Galvanikraum bezeichnet werden.

Der Raum 15 wird erfindungsgemäß dann teilweise mit einem Elektrolyt gefüllt. Weiterhin sind in dem Raum 15 zwei Anoden 16 angeordnet, die von einer entsprechenden Halterung 17 gehalten werden. Die Halterung 17 wird von einer zentrischen Welle 18 durchsetzt, die mittels eines Riemenantriebs 19 von einem Elektromotor 20 angetrieben wird, wodurch auch der Lagerinnenring 4 dreht. Die Welle 18 ist axial elektrisch isoliert, d. h. in der Welle 18 ist eine elektrische Isolierung 21 angeordnet. Der eine Teil der Welle 18 (in Fig. 3 der linke Teil) ist elektrisch mit dem Lagerinnenring 4 verbunden. Der andere Teil der Welle 18 (in Fig. 3 der rechte Teil) ist elektrisch über die Halterung 17 mit den Anoden 16 verbunden. Eine nicht dargestellte Stromquelle wird nunmehr angeschlossen und zwar so, dass die Anoden 16 mit dem Plus-Pol und der Lagerinnenring 4 mit dem Minus-Pol verbunden ist.

Demgemäß fungieren die Anoden 16 als Opferanoden, deren Material sich an der zylindrischen Bohrung 8 anlagert. In dem Elektrolyt sind Hartstoffpartikel, z. B. Diamantpartikel, enthalten, so dass sich durch die Anlagerung des Materials der Anoden 16 eine Schicht am Innenring 4 anlagert, der - wie in Fig. 2 illustriert - die Hartstoffpartikel fixiert. Das langsame und gleichmäßige Drehen des Innenrings 4 während des galvanischen Prozesses durch den Elektromotor 20 schafft eine gleichmäßige Schicht auf der Bohrung 8. Während sich im vorliegenden Falle das Nickel auf der Bohrungsoberfläche des Innenrings 4 abscheidet, werden also die im Elektrolyt schwimmenden Diamantpartikeln durch die Drehung immer wieder verwirbelt, was zu einer gleichmäßigen reibungserhöhenden Beschichtung 10 führt.

Die Vorrichtung zur Anlagerung der reibungserhöhenden Beschichtung ist in vorteilhafter Weise sehr kompakt aufgebaut.

### Bezugszeichenliste

- 1: Lageranordnung
- 2: Lager
- 3: Lageraußenring
- 4: Lagerinnenring
- 5: außenzylindrische Sitzfläche
- 6: Bohrung
- 7: erstes Bauteil (Gehäuse)
- 8: zylindrische Bohrung
- 9: zweites Bauteil (Welle)
- 10: reibungserhöhende Beschichtung
- 11: Hartstoffpartikel
- 12: elektrolytisch abgeschiedene Metallschicht
- 13: Deckelelement
- 14: Deckelelement
- 15: flüssigkeitsdichter Raum
- 16: Anode
- 17: Halterung
- 18: Welle
- 19: Riemenantrieb
- 20: Elektromotor
- 21: elektrische Isolierung

- t: Dicke

## Patentansprüche

1. Verfahren zur Herstellung eines Lageraußenrings (3) oder eines Lagerinnenrings (4) eines Lagers (2), der an einer außenzylindrischen Sitzfläche (5) oder an einer zylindrischen Bohrung (8) mit einer reibungserhöhenden Beschichtung (10) versehen wird, mit den Schritten:
a) beidseitiges Abschließen der Stirnseiten des Lageraußenrings (3) oder des Lagerinnenrings (4) mit Deckelelementen (13, 14) und im Falle des Lageraußenrings (3) des radial außenliegenden Raums mit einem Abdeckelement, so dass ein flüssigkeitsdichter Raum (15) entsteht;
b) Einbringen mindestens einer Anode (16) und Einfüllen eines Elektrolyts in den Raum (15), wobei in dem Elektrolyt vorzugsweise Hartstoffpartikel (11) enthalten sind;
c) Anlegen einer Gleichspannung zwischen den Lageraußenring (3) oder den Lagerinnenring (4) und die mindestens eine Anode (16), bis sich eine Schicht gewünschter Dicke bestehend aus dem Material der Anode (16) galvanisch an die Oberfläche der Sitzfläche (5) oder der Bohrung (8) angelegt hat,
wobei der Raum (15) nur teilweise mit Elektrolyt gefüllt wird und während Schritt c) der Lageraußenring (3) oder der Lagerinnenring (4) gedreht wird.

## Claims

1. Method for producing a bearing outer ring (3) or a bearing inner ring (4) of a bearing (2), which is provided with a friction-increasing coating (10) on an outer-cylindrical seat surface (5) or on a cylindrical bore (8), with the steps:
a) closing-off of the end faces of the bearing outer ring (3) or of the bearing inner ring (4) on both sides by means of cover elements (13, 14) and, in the case of the bearing outer ring (3) of the radially outer space, by means of a covering element, so that a liquid-tight space (15) is obtained;
b) introduction of at least one anode (16) and pouring of an electrolyte into the space (15), the electrolyte preferably containing hard material particles (11);
c) application of a direct voltage between the bearing outer ring (3) or the bearing inner ring (4) and the at least one anode (16), until a layer of desired thickness, consisting of the material of the anode (16), has been applied by electroplating to the surface of the seat surface (5) or of the bore (8),
the space (15) being filled only partially with electrolyte, and the bearing outer ring (3) or the bearing inner ring (4) being rotated during step c).

## Revendications

1. Procédé de fabrication d'une bague extérieure de palier (3) ou d'une bague intérieure de palier (4) d'un palier (2), laquelle est pourvue d'un revêtement augmentant le frottement (10) sur une surface d'appui cylindrique extérieure (5) ou sur un alésage cylindrique (8), comprenant les étapes de :
a) fermeture des deux côtés des côtés frontaux de la bague extérieure de palier (3) ou de la bague intérieure de palier (4) par des éléments de couvercle (13, 14) et, dans le cas de la bague extérieure de palier (3), de l'espace radialement extérieur par un élément de recouvrement, de telle sorte qu'un espace étanche aux liquides (15) soit produit ;
b) placement d'au moins une anode (16) et remplissage de l'espace (15) par un électrolyte, des particules de matière dure (11) étant de préférence contenues dans l'électrolyte ;
c) application d'une tension continue entre la bague extérieure de palier (3) ou la bague intérieure de palier (4) et l'au moins une anode (16) jusqu'à ce qu'une couche d'épaisseur souhaitée constituée du matériau de l'anode (16) soit appliquée galvaniquement sur la surface de la surface d'appui (5) ou de l'alésage (8),
l'espace (15) n'étant rempli que partiellement d'électrolyte et la bague extérieure de palier (3) ou la bague intérieure de palier (4) étant tournée pendant l'étape c).
